# EUROPÄISCHE PATENTSCHRIFT

(11) **EP 1 982 086 B1**
(45) Veröffentlichungstag und Bekanntmachung des Hinweises auf die Patenterteilung: **04.05.2016**
(21) Anmeldenummer: 07703013.8
(22) Anmeldetag: 25.01.2007
(51) Int. Cl.: F16D 55/02

(54) **SCHEIBENBREMSE, INSBESONDERE FÜR EIN NUTZFAHRZEUG**
DISK BRAKE, IN PARTICULAR FOR AN UTILITY VEHICLE
FREIN A DISQUE, UTILISE EN PARTICULIER DANS UN VEHICULE UTILITAIRE

(30) Priorität: 26.01.2006 DE 102006003746
(43) Veröffentlichungstag der Anmeldung: 22.10.2008
(73) Patentinhaber: KNORR-BREMSE Systeme für Nutzfahrzeuge GmbH, 80809 München (DE)
(72) Erfinder: HÄRTL, Thomas, 94501 Beutelsbach (DE); TREIPL, Josef, 94501 Beutelsbach (DE)
(74) Vertreter: Mattusch, Gundula
(86) Internationale Anmeldenummer: PCT/EP2007/000616
(87) Internationale Veröffentlichungsnummer: WO 2007/085439

(56) Entgegenhaltungen:
- DE-A1- 4 243 875
- DE-A1- 10 304 713

## Beschreibung

Die vorliegende Erfindung betrifft eine Scheibenbremse, insbesondere für ein Nutzfahrzeug, entsprechend dem Oberbegriff des Anspruchs 1. Eine gattungsgemäße Scheibenbremse ist z.B. aus der DE 103 04 713 A1 bekannt.

Eine andere Art von Scheibenbremse ist beispielsweise aus der DE 199 07 958 A1 bekannt. Darin ist gezeigt und beschrieben, dass zum Schutz eines Funktionsteile des Bremssattels, wie Stellspindeln einer Zuspanneinrichtung oder dergleichen aufnehmenden Aufnahmeraumes eine der Bremsscheibe zugewandte Montage- und Funktionsöffnung mittels einer Verschlussplatte verschlossen ist. Im übrigen dient die Verschlussplatte als Tragteil diverser Anbauteile, wie Faltenbälgen, Dichtungen und dergleichen.

Die Befestigung der Verschlussplatte erfolgt mittels Schrauben, die im Randbereich umfänglich angeordnet und in den Bremssattel eingedreht sind.

Allerdings ist diese Art der Befestigung, zu der insbesondere ein drehmomentüberwachtes Anziehen der Schrauben zählt, sehr zeitaufwendig und daher kostenintensiv und steht somit einer fertigungstechnischen Optimierung entgegen.

Um eine wirkungsvolle Abdichtung der Verschlussplatte gegenüber dem Bremssattel zu erreichen und so das Eindringen von Feuchtigkeit und Schmutz in den Aufnahmeraum zu verhindern, liegt der Verschlussdeckel abgedichtet am Bremssattel an. Dabei erfolgt die Abdichtung bislang über eine ausgehärtete Dichtschnur, die in einer externen Vormontageeinrichtung zunächst als ZweiKomponenten-Dichtung an den Verschlussdeckel montiert wird. Aus naheliegenden Gründen ist diese Art der Aufbringung eines Dichtmittels nur mit einem erheblichen Zeitaufwand zu realisieren. Des Weiteren muss die Dichtfläche des Bremssattels, der üblicherweise als Gussteil ausgebildet ist, d.h., der Bereich, an dem die Dichtschnur anliegt, mechanisch bearbeitet werden, insbesondere durch Fräsen.

Da Scheibenbremsen als Serienteile in großen Stückzahlen hergestellt werden, kommt einer einfachen und schnellen Herstellung der Scheibenbremse eine besondere Bedeutung zu, der die bekannten konstruktiven Gegebenheiten nicht gerecht werden.

Der Erfindung liegt daher die Aufgabe zugrunde, eine Scheibenbremse der gattungsgemäßen Art, d.h. beider der Verschlussdeckel formschlüssig mit dem Bremssattel verbunden ist, so weiter zu entwickeln, dass sie einfacher und kostengünstiger herstell- und montierbar ist.

Diese Aufgabe wird durch eine Scheibenbremse mit den Merkmalen des Anspruchs 1 gelöst.

Durch die formschlüssige Verbindung des Verschlussdeckels mit dem Bremssattel sind vorbereitende Arbeiten vor einer Montage des Verschlussdeckels, wie sie beispielsweise durch das Einbringen von Gewindebohrungen in den Bremssattel zwingend notwendig waren, nicht mehr erforderlich. Dabei weist der Verschlussdeckel im umlaufenden Randbereich Formschlussmittel auf, die mit bremssattelseitigen Formschlussmitteln korrespondieren.

Erfindungsgemäß bestehen die Formschlussmittel des Verschlussdeckels aus Rastzungen, die Hinterschneidungen des Bremssattels hintergreifen, so dass eine sichere Verbindung des Verschlussdeckels mit dem Bremssattel hergestellt wird.

Diese Rastzungen sind elastisch verformbar, so dass der Verschlussdeckel in den die Hinterschneidungen aufweisenden Randbereich der Funktions- und Montageöffnung des Bremssattels lediglich eingedrückt werden muss, bis die Rastzungen in der Hinterschneidung zur Anlage kommen. Prinzipiell wird der Verschlussdeckel somit eingeklippst.

Die Rastzungen sind durch mehrfaches Einschlitzen eines am Verschlussdeckel im übrigen angeformten Falzes gebildet und insoweit einfach herstellbar als der Verschlussdeckel als Blechform- bzw. -stanzteil hergestellt ist. Die jeder Rastzunge zugeordnete Hinterschneidung ist Teil einer umfänglichen Gesamtausnehmung im Randbereich der Montage- und Funktionsöffnung des Aufnahmeraumes, die beim Gießen des Bremssattels mit eingebracht wird.

Diese Formschlussverbindung bildet nicht nur eine Verliersicherung für den Verschlussdeckel, sondern darüber hinaus eine Sicherung vor einem unerlaubten Öffnen der Bremse, da der Verschlussdeckel nicht zerstörungsfrei demontierbar ist.

Nach einem weiteren Gedanken der Erfindung ist vorgesehen, zur Abdichtung des Verschlussdeckels gegenüber dem Bremssattel in einen zwischen dem Verschlussdeckel und dem Verschlussdeckelsitz des Bremssattels gebildeten Zwischenraum vor der Montage des Verschlussdeckels eine Flüssigdichtung einzuspritzen, die nach dem Einpressen des Verschlussdeckels aushärtet und dessen Verrutschen unterbindet.

Da sich diese Flüssigdichtung an die Oberflächengegebenheiten des Verschlussdeckelsitzes anpasst, ist eine besondere Bearbeitung dieses Bereiches nicht erforderlich. Auch dies führt zu einer Reduzierung des Fertigungs- bzw. Montageaufwands, so dass sich zusammen mit der vereinfachten Herstellung und Montage des Verschlussdeckels signifikante Vorteile, insbesondere Kostenvorteile gegenüber dem Stand der Technik ergeben.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer erfindungsgemäßen Scheibenbremse in einer perspektivischen Ansicht

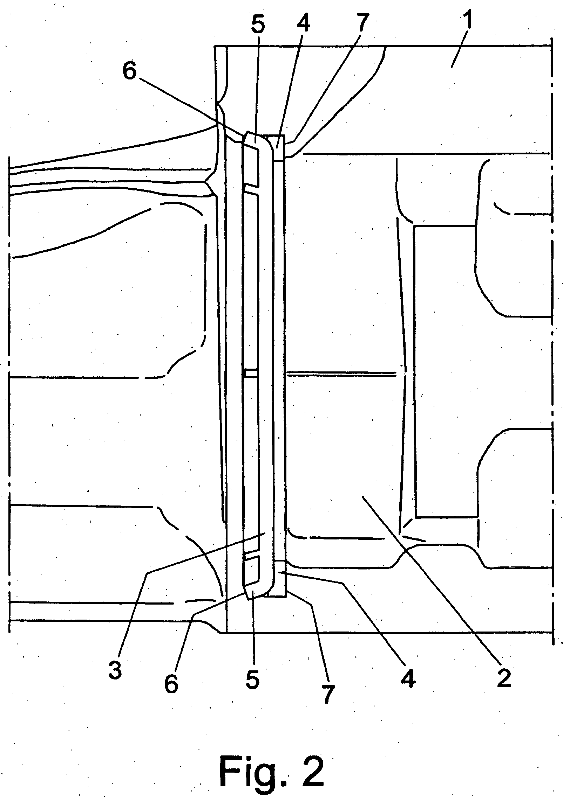

- Figur 2: einen Querschnitt durch den Teil nach Figur 1
- Figur 3: das Einzelteil nach Figur 1 in einer weiteren perspektivischen Ansicht
- Figur 4: eine Einzelheit der Scheibenbremse, schaubildlich dargestellt.

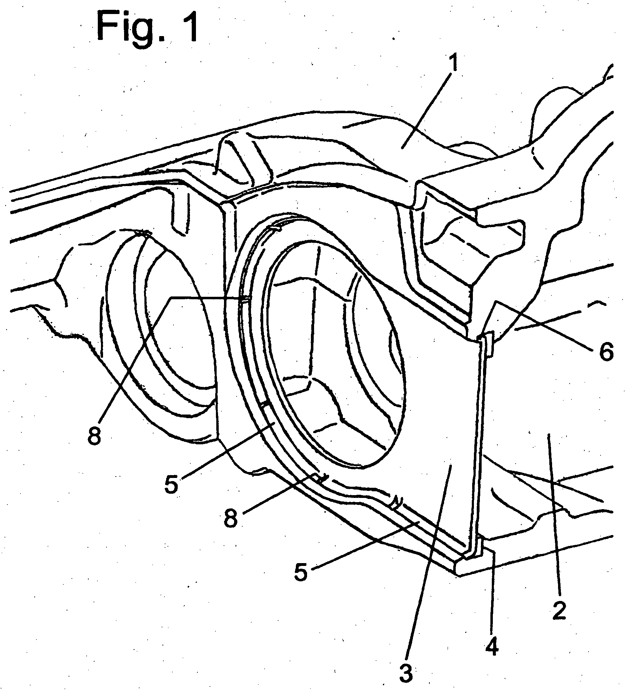

In der Figur 1 ist ein Bremssattel 1 einer Scheibenbremse, insbesondere für ein Nutzfahrzeug gezeigt, der einen Aufnahmeraum 2 für Funktionsteile wie Stellspindeln einer Zuspanneinrichtung oder dergleichen aufweist, dessen Montage- und Funktionsöffnung durch einen Verschlussdeckel 3 verschlossen ist.

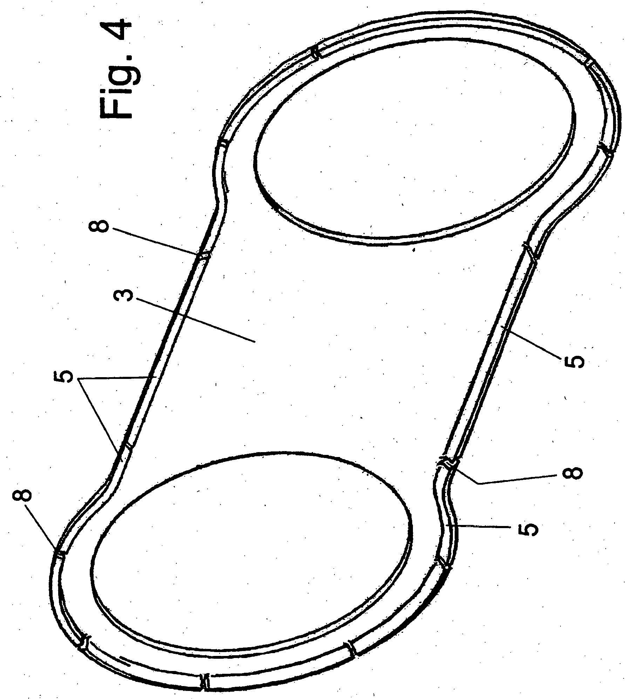

Dieser Verschlussdeckel 3 ist formschlüssig mit dem Bremssattel 1 verbunden. Erfindungsgemäß weist die Verschlussplatte 3, wie besonders deutlich in der Figur 4 zu erkennen ist, an ihrem umlaufenden Rand mehrere Rastzungen 5 auf, die durch einen abgewinkelten und mit Schlitzen 8 versehenen Falz gebildet sind, wobei die Rastzungen 5 des aus einem Blech geformten Verschlussdeckels 3 eine gewisse Elastizität aufweisen.

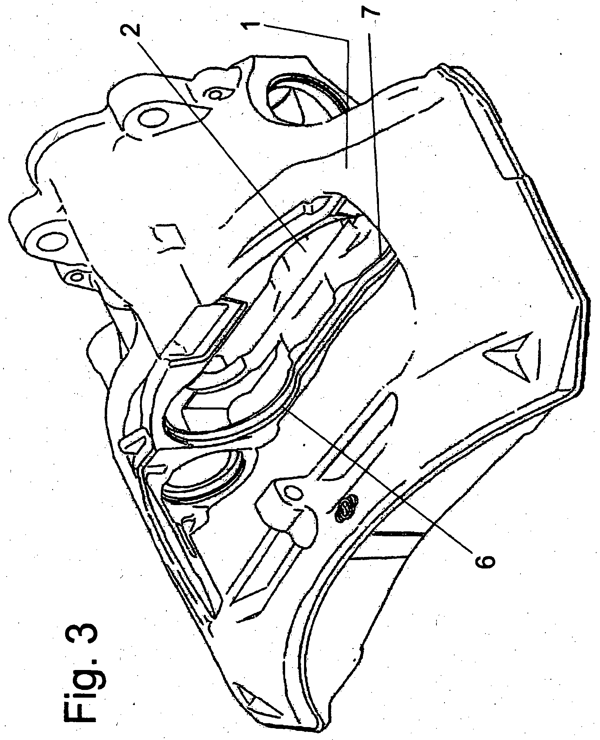

Insbesondere in der Figur 3 ist zu erkennen, dass der Randbereich der Montage- und Funktionsöffnung des Aufnahmeraumes 2 umlaufend als Sitz 7 ausgebildet ist, an dem sich der Verschlussdeckel 3 in montierter Stellung mittelbar abstützt.

Vor einer Montage des Verschlussdeckels 3 wird auf den Sitz 7 eine Flüssigdichtung aufgebracht. Danach erfolgt ein Einpressen des Verschlussdeckels 3 in die Flüssigdichtung 4, wobei der Randbereich der Montage- und Funktionsöffnung eine umlaufende Hinterschneidung 6 aufweist, die nach dem Einpressen des Verschlussdeckels 3 von den Rastzungen 5 hintergriffen wird. Nach einem Aushärten der Flüssigdichtung 4 ist somit ein fester Verbund zwischen dem Verschlussdeckel 3 und dem Bremssattel gebildet, der überdies in ausreichender Weise abgedichtet ist.

Durch das Aufbringen der Flüssigdichtung 4 können problemlos Rohgussunebenheiten des Sitzes 7 ausgeglichen werden, wobei die Flüssigdichtung 4 zusätzlich eine Klebverbindung mit dem Verschlussdeckel 3 eingeht.

Wie leicht erkennbar ist, ist ein Öffnen des Aufnahmeraumes 2 nur durch Zerstören des Verschlussdeckels 3 möglich, was in sicherheitstechnischer Hinsicht eine durchaus bemerkenswerte Verbesserung darstellt.

### Bezugszeichenliste

- 1: Bremssattel
- 2: Aufnahmeraum
- 3: Verschlussdeckel
- 4: Dichtung
- 5: Rastzunge
- 6: Hinterschneidung
- 7: Sitz
- 8: Schlitz

## Patentansprüche

1. Scheibenbremse, insbesondere für ein Nutzfahrzeug, mit einem Bremssattel (1), der eine mit jeweils aus einer Belagträgerplatte und einem darauf befestigten Reibbelag bestehenden Bremsbelägen in Wirkverbindung bringbare Bremsscheibe übergreift, und mindestens einem, einen Aufnahmeraum (2) für Funktionsteile des Bremssattels verschließenden und abgedichtet anliegenden, formschlüssig mit dem Bremssattel (1) verbundenen Verschlussdeckel (3), **dadurch gekennzeichnet, dass** der Verschlussdeckel (3) als Formschlussmittel elastisch verformbare, sich in die dem Aufnahmeraum (2) abgewandte Richtung erstreckende Rastzungen (5) aufweist, die eine im umlaufenden Randbereich einer durch den Verschlussdeckel (3) verschlossenen Montage- und Funktionsöffnung des Aufnahmeraumes (2) vorgesehene Hinterschneidung (6) hintergreifen, wobei die am umlaufenden Randbereich des Verschlussdeckels (3) angeordneten Rastzungen (5) aus einem gegenüber der Verschlussplatte (3) im übrigen abgewinkelten Falz gebildet und durch Schlitze (8) voneinander getrennt sind.

2. Scheibenbremse nach Anspruch 1, **dadurch gekennzeichnet, dass** die Abdichtung zwischen der Verschlussplatte (3) und dem Bremssattel (1) durch eine Flüssigdichtung (4) erfolgt, die vor einer Montage der Verschlussplatte (3) auf den Randbereich der Montage- und Funktionsöffnung des Aufnahmeraumes (2) vorgesehenen Sitz (7) aufgebracht ist und an den nach einer Montage die Verschlussplatte (3) anliegt.

3. Scheibenbremse nach Anspruch 2, **dadurch gekennzeichnet, dass** die Flüssigdichtung (4) in einem zwischen der Verschlussplatte (3) und dem Sitz (7) gebildeten Zwischenraum angeordnet ist.

4. Scheibenbremse nach einem der vorhergehenden Ansprüche, **dadurch gekennzeichnet, dass** die Verschlussplatte (3) als Blechformteil ausgebildet ist.

## Claims

1. Disc brake, in particular for a commercial vehicle, comprising a brake calliper (1) which straddles a brake disc which can be brought into operative contact with brake pads each comprising a backing plate and, fastened thereon, a friction lining, and further comprising at least one closure cover (3), which closes off and bears in a sealed manner against a housing compartment (2) for functional components of the brake calliper, **characterised in that** the closure cover (3) has positive locking means in the form of elastically deformable latching tongues (5), which extend in the direction away from the housing compartment (2) and engage from behind an undercut (6) provided in the peripheral edge region of a mounting and functional opening of the housing compartment (2), wherein the latching tongues (5) provided in the peripheral edge region of the closure cover (3) are represented by a fold which is angled away from the closure plate (3), and are separated from one another by slots (8).

2. Disc brake according to claim 1, **characterised in that** sealing between the closure plate (3) and the brake calliper (1) is provided by a fluid seal (4) which, prior to mounting the closure plate (3), is applied to a seat (7) provided in the edge region of the mounting and functional opening of the housing compartment (2) and against which seat the closure plate (3) bears after mounting.

3. Disc brake according to claim 2, **characterised in that** the fluid seal (4) is located in a gap formed between the closure plate (3) and the seat (7).

4. Disc brake according to any of the preceding claims, **characterised in that** the closure plate (3) takes the form of a shaped sheet metal part.

## Revendications

1. Frein à disque, en particulier pour un véhicule utilitaire, comprenant un étrier de frein (1) chevauchant un disque de frein apte à être porté en connexion active avec des garnitures de frein, dont chacune est constituée par un disque de support de garniture et une garniture à friction fixée sur le disque, et comprenant au moins un couvercle de fermeture (3), qui ferme un espace de réception (2) pour des pièces fonctionnelles dudit étrier de frein et porte, de façon étanche, contre ledit étrier de frein, en étant relié au dernier par complémentarité de formes, **caractérisé en ce que** ledit couvercle de fermeture (3) comprend des languettes d'enclenchement (5) élastiquement déformable en tant que moyens de liaison par complémentarité de formes, qui s'étendent dans ledit espace de réception (2), auxdites languettes d'enclenchement venant en prise derrière une contre-dépouille (6) formé dans la zone de bordure périphérique d'une ouverture d'assemblage et fonctionnelle dudit espace de réception (2), qui est fermé par ledit couvercle de fermeture (3), dans lequel lesdites languettes d'enclenchement (5) disposées le long de la zone de bordure périphérique dudit couvercle de fermeture (3) sont formées d'un pliage en angle, pour le reste, par rapport à ladite plaque de fermeture (3) et séparées, l'une de l'autre, par des fentes (8).

2. Frein à disque selon la revendication 1, **caractérisé en ce que** l'étanchéité entre ladite plaque de fermeture (3) et ledit étrier de frein (1) est réalisée moyennant un joint d'étanchéité liquide (4), qui est appliqué avant un assemblage de ladite plaque de fermeture (3) sur une siège (7) formée dans ladite zone de bordure de ladite ouverture d'assemblage et fonctionnelle et porte contre ladite plaque de fermeture (3) après un assemblage.

3. Frein à disque selon la revendication 2, **caractérisé en ce que** ledit joint d'étanchéité liquide (4) est disposé dans un espace formé entre ladite plaque de fermeture (3) et ladite siège (7).

4. Frein à disque selon une quelconque des revendications précédentes, **caractérisé en ce que** ladite plaque de fermeture (3) est configuré sous forme d'une pièce moulée en tôle.
